# EUROPEAN PATENT APPLICATION

(11) **EP 3 764 576 A1**
(43) Date of publication of application: **13.01.2021**
(21) Application number: 20177363.7
(22) Date of filing: 29.05.2020
(51) Int. Cl.: H04L 1/18

(54) **SYSTEM AND METHOD FOR IMPLEMENTING A HYBRID AUTOMATIC REPEAT REQUEST PROCESS**

(30) Priority: 12.07.2019 US 201962873574 P; 15.07.2019 US 201962874457 P; 18.05.2020 US 202016877080
(71) Applicant: Samsung Electronics Co., Ltd., Gyeonggi-do 16677 (KR)
(72) Inventor: DUAN, Ruchen, Santa Clara, CA 95050 (US); LEE, Wook Bong, San Jose, CA 95136 (US); RANGANATH, Ashok, San Jose, CA 95129 (US); IBRAHIM, Mostafa Sayed Roshdy, San Jose, CA 95134 (US); KANDALA, Srinivas, Morgan Hill, CA 95037 (US)
(74) Representative: Kuhnen & Wacker Patent- und Rechtsanwaltsbüro PartG mbB

(57) **Abstract**

A method of implementing a hybrid automatic repeat request (HARQ) process. The method includes generating a HARQ transmission that comprises one or more HARQ units by: determining a HARQ unit size of the one or more HARQ units; generating the one or more HARQ units by assigning to each respective HARQ unit, based on the HARQ unit size, at least a respective portion of a media access control (MAC) layer data unit; and generating a header for the HARQ transmission. The method further includes transmitting the HARQ transmission to a receiver. The one or more HARQ units are physical layer data units.

## Description

### CROSS-REFERENCE TO RELATED APPLICATIONS

This application is based on and, under 35 U.S.C. § 119(e), claims priority to U.S. Provisional Patent Application No. 62/873,574, filed on July 12, 2019 in the United States Patent and Trademark Office. This application is further based on and, under 35 U.S.C. § 119(e), further claims priority to U.S. Provisional Patent Application No. 62/874,457, filed on July 15, 2019 in the United States Patent and Trademark Office. The entire contents of, respectively, U.S. Provisional Patent Application No. 62/873,574 and U.S. Provisional Patent Application No. 62/874,457 are incorporated herein by reference.

### FIELD

The present disclosure is generally related to wireless communication systems. In particular, the present disclosure is related to a system and method for implementing a hybrid automatic repeat request (HARQ) process.

### BACKGROUND

HARQ is a retransmission scheme that can involve any of transmission by a transmitter to a receiver, feedback from the receiver to the transmitter, retransmission by the transmitter to the receiver, or combining of received signals (e.g., from an initial transmission and a retransmission) by the receiver.

### SUMMARY

According to some embodiments, a method of implementing a hybrid automatic repeat request (HARQ) process includes generating a HARQ transmission that comprises one or more HARQ units by: determining a HARQ unit size of the one or more HARQ units; generating the one or more HARQ units by assigning to each respective HARQ unit, based on the HARQ unit size, at least a respective portion of a media access control (MAC) layer data unit; and generating a header for the HARQ transmission. The method further includes transmitting the HARQ transmission to a receiver. The one or more HARQ units are physical layer data units.

According to some embodiments, a system for implementing a HARQ process includes a processor and a memory storing non-transitory processor-executable instructions that, when executed by the processor, cause the processor to perform certain operations. The operations include generating a HARQ transmission that comprises one or more HARQ units by: determining a HARQ unit size of the one or more HARQ units; generating the one or more HARQ units by assigning to each respective HARQ unit, based on the HARQ unit size, at least a respective portion of a MAC layer data unit; and generating a header for the HARQ transmission. The operations further include transmitting the HARQ transmission to a receiver. The one or more HARQ units are physical layer data units.

According to some embodiments, a method of implementing, by a receiver, a HARQ process includes receiving, from a transmitter, a HARQ transmission that comprises a first HARQ unit comprising a first physical layer error detecting code and at least an encoded first portion of a MAC layer data unit; determining, using the first physical layer error detecting code, that the first HARQ unit has an error; and transmitting, to the transmitter, feedback indicating that the first HARQ unit has the error.

### BRIEF DESCRIPTION OF THE DRAWINGS

Aspects, features, and advantages of certain embodiments of the present disclosure will be readily apparent from the following detailed description and the accompanying drawings.
FIG. 1 shows a diagram of a HARQ system implementing a HARQ process, according to some embodiments.
FIG. 2 shows a diagram of a HARQ system including a transmitter and a receiver, according to some embodiments.
FIG. 3 shows a diagram of certain HARQ transmission configurations, according to some embodiments.
FIG. 4 shows a diagram of a HARQ transmission configuration, according to some embodiments.
FIG. 5 shows a flowchart of a HARQ process including a HARQ transmission, according to some embodiments.
FIG. 6 shows a flowchart of a HARQ process including a feedback process, according to some embodiments.
FIG. 7 shows a diagram of an electronic device in a network environment, according to some embodiments.

### DETAILED DESCRIPTION

Certain embodiments described herein involve a HARQ communication scheme. HARQ retransmission and the combining of received signals can provide for an increased probability that a receiver can decode a received packet, which can improve accuracy and/or throughput. Certain communication systems, such as Wi-Fi systems, could benefit from implementing such a HARQ communication scheme. However, there are challenges to implementing accurate, fast (e.g., high throughput), or efficient HARQ communication schemes in such communication systems. Certain embodiments described herein provide for improved HARQ communication schemes, and may involve one or more improved transmission mechanisms, transmission configurations, feedback schemes, error code schemes, and/or improved control signaling.

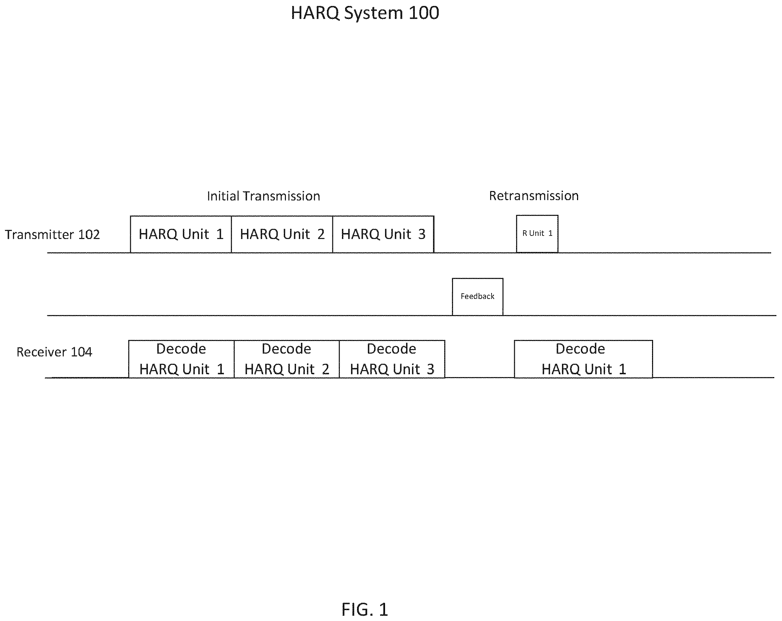

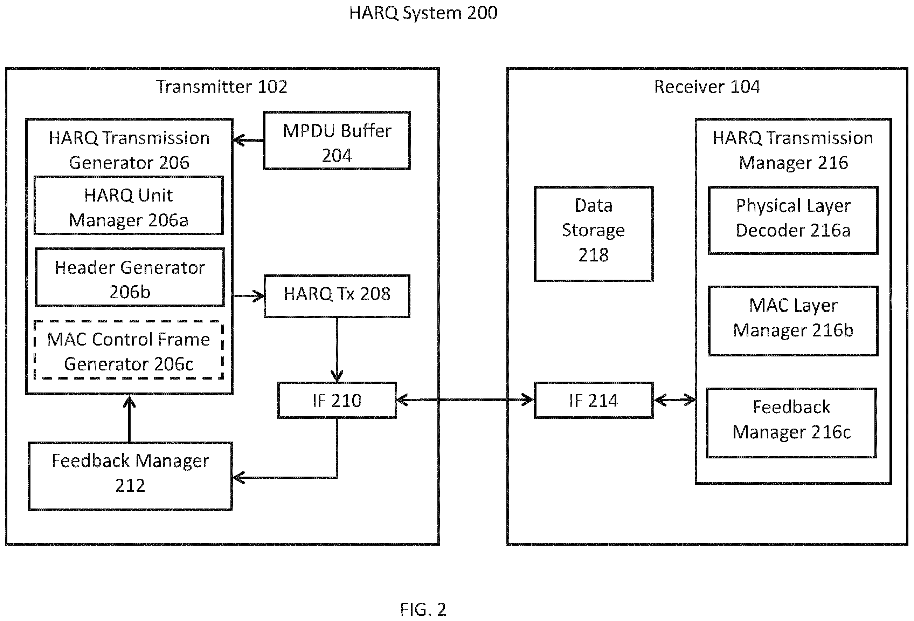

FIG. 1 shows a diagram of a HARQ system 100 implementing a HARQ process, according to some embodiments. The depicted HARQ system 100 includes a transmitter 102 and a receiver 104. The transmitter 102 may include an encoder configured to encode HARQ transmissions, and the receiver 104 may include a decoder configured to decode HARQ transmissions. The transmitter 102 and the receiver 104 are described in more detail with respect to FIG. 2. The depicted example HARQ process involves an initial HARQ transmission, decoding, feedback, and a retransmission.

FIG. 1 shows a general overview of the HARQ process, and the HARQ process will be described in more detail in reference to FIG. 2 through FIG. 6. As shown in FIG. 1, the transmitter 102 is configured to transmit, to the receiver 104, a HARQ transmission comprising one or more HARQ units. In the depicted example, the HARQ transmission includes three HARQ units: HARQ unit 1, HARQ unit 2, and HARQ unit 3. In other embodiments, a different number of HARQ units can be included in the HARQ transmission (e.g., one, two, four, or more HARQ units). The HARQ units are physical layer ("PHY") data units (e.g., physical layer convergence procedure (PLCP) protocol data units (PPDUs)) that include one or more media access control (MAC) layer data units (e.g., MAC protocol data units (MPDUs) or MAC service data units (MSDUs)).

The HARQ transmission that includes the three HARQ units is an "initial" transmission of the HARQ process (e.g., in that it is a first transmission of the HARQ process, possibly aside from initiation communications, handshake protocol communications, or control information communications). The HARQ transmission may be the first transmission in the HARQ process that includes a data payload (e.g., a payload including one or more MPDUs encoded in one or more physical layer HARQ units).

The receiver 104 may be configured to receive the one or more HARQ transmissions and/or retransmissions from the transmitter 102, to decode the one or more HARQ transmissions and/or retransmissions, and to transmit feedback information to the transmitter 102. In some embodiments, the receiver 104 is configured to decode HARQ units to extract MPDUs that were encoded in the HARQ units. In some embodiments, the receiver 104 is also or alternatively configured to process MPDUs (e.g., the MPDUs extracted from HARQ units) to extract or analyze information included in the MPDUs (such as MSDU information). In some embodiments, after decoding the HARQ units, the receiver 104 may be configured to extract the MPDUs, remove the MAC header(s) and extract the MSDUs. Responsive to the MSDUs being correctly processed, the receiver 104 may pass the MSDUs from the MAC layer to an upper layer.

As discussed in more detail below, the HARQ transmission may include control information (e.g., in a header (such as, for example, in a preamble of the header)), or control information for the HARQ transmission may be sent out-of-band or independently from the HARQ transmission (e.g., as one or more MAC layer control frames), and the receiver 104 may make use of such control information when decoding HARQ units or processing MPDUs included in the HARQ transmission.

The receiver 104 is configured to determine feedback information (which may be referred to herein as "feedback") and to transmit the feedback to the transmitter 102. The feedback may include acknowledgement (ACK) or non-acknowledgement (NACK) information. The receiver 104 may determine the feedback. For example, the receiver 104 may determine whether an error is detected for at least some portion of the HARQ transmission, such that the at least some portion of the HARQ transmission is not correctly decoded. The feedback may be used to cause the transmitter 102 to send a "retransmission" (defined in detail below) that may include, for example, the data that was not correctly decoded, or may include other information (e.g., parity bits or other error management code, a different encoding of the initially transmitted data, or other data), and using this retransmission, the receiver 104 may be able to decode the portion of the HARQ transmission that was not initially correctly decoded. Certain example techniques for using the retransmission to decode the portion of the HARQ transmission that was not initially correctly decoded are described in detail below, including chase combining techniques and incremental redundancy techniques.

ACK information (which may be referred to herein as "ACK") may indicate an acknowledgement that at least some of the information included in the HARQ transmission was correctly decoded and processed by the receiver 104. The terms "correctly decoded" or "correctly processed," as used herein, can mean completely decoded or processed without errors, or decoded or processed with an acceptable number of errors or an acceptable number of potential errors (such an acceptable number being, for example, predetermined (e.g., defined in a communication standard)), or can mean able to be (or sufficiently likely to be) decoded (e.g., based on a determination performed by a receiver before decoding or processing is complete) without errors or decoded or processed with an acceptable number of errors, or an acceptable likelihood of a number of errors being below a threshold, or an acceptable number of potential errors. "Potential errors" may be determined based on a determined likelihood of one or more errors.

In some embodiments, the ACK may be a physical layer acknowledgement, indicating that one or more HARQ units was correctly decoded by the receiver 104. In some embodiments, the ACK may be a MAC layer acknowledgement, indicating that one or more MAC layer data units (e.g., one or more of the MPDUs included in one or more of the HARQ units) was correctly processed by the receiver 104. In some embodiments, the ACK may indicate acknowledgement for both (i) one or more HARQ units and (ii) one or more MPDUs. For example, the ACK may indicate that one or more HARQ units was correctly decoded, and that one or more extracted MAC layer units (which may have been encoded in the correctly decoded HARQ units) was correctly processed.

The feedback may also, or alternatively, include NACK information (which may be referred to herein as "NACK"), which can indicate that at least some information included in the HARQ transmission was not correctly decoded by the receiver 104. The NACK may be a physical layer non-acknowledgement, indicating that one or more HARQ units was not correctly decoded by the receiver 104. In some embodiments, the NACK may be a MAC layer non-acknowledgement, indicating that one or more MAC layer data units (e.g., one or more of the MPDUs extracted from, or decoded from, one or more of the HARQ units) was not correctly processed by the receiver 104. In some embodiments, the NACK may indicate non-acknowledgement for both (i) a first one of the HARQ units and (ii) one or more MPDUs that were encoded in a second one of the HARQ units. In some embodiments, when the receiver 104 determines to send the NACK for at least a portion of the HARQ transmission, the receiver 104 does not send an ACK for other portions of the HARQ transmission that were correctly decoded, and the transmitter 102 is configured to interpret receipt of such a NACK as an indication that the portion of the HARQ transmission that the NACK pertains to was not correctly decoded, and, in some embodiments, also as an implicit indication that the other portion(s) of the HARQ transmission (the portion(s) of the HARQ transmission that the NACK does not pertain to) was correctly decoded.

The transmitter 102 is configured to receive the feedback, and to determine whether to send a retransmission to the receiver 104. As used herein, the term "retransmission" can refer to a transmission subsequent to the initial transmission, or to a transmission responsive to feedback received from the receiver 104. In some embodiments, the retransmission has a start time later than a start time of the initial transmission. In some embodiments, the retransmission may partially temporally overlap with the initial transmission. The retransmission can include at least some of the same or similar data included in the initial transmission, or information related to the data included in the initial transmission (e.g., parity bits or other error management code corresponding to the data included in the original transmission, or a different encoding of the initially transmitted data). This data may include one or more HARQ units included in the initial transmission, or one or more MPDUs included in the initial transmission. The one or more MPDUs included in the initial transmission may or may not be encoded differently than in the retransmission. In some embodiments, in addition to such data, the retransmission may include data (e.g., additional data) that (i) was not sent in the initial transmission, and (ii) is not error code (also referred to herein as error detecting code) corresponding to the data that was sent in the initial transmission. The transmitter 102 may determine to include such additional data when it is possible to include both the data included in the initial transmission and the additional data while meeting any size, timing, or other constraints for the retransmission.

The transmitter 102 may use the retransmission at least in part to resend data that the feedback indicates was incorrectly decoded by the receiver 104, or to resend data related to data that was incorrectly decoded by the receiver 104 (e.g., error code corresponding to the data that was incorrectly decoded by the receiver 104). For example, if the transmitter 102 receives a NACK indicating that a particular HARQ unit was not correctly decoded, the transmitter 102 may responsively determine to send a retransmission that includes the particular HARQ unit or error code corresponding to the particular HARQ unit. If the transmitter 102 receives a NACK indicating that an MPDU was not correctly processed, the transmitter 102 may responsively determine to send a retransmission that includes the MPDU or error code corresponding to the MPDU. In some embodiments, discussed in more detail below, the MPDU may have been fragmented between two HARQ units in the initial transmission, and the transmitter 102 may determine to resend the same two HARQ units (e.g., with the same encoded MPDUs as were included in the initial transmission), or may determine to send, in the retransmission, the MPDU (e.g., encoded in a single HARQ unit, or again fragmented between two HARQ units, which may or may not be the same two HARQ units across which the MPDU was fragmented in the initial transmission).

If the feedback indicates that all content of the HARQ transmission has been correctly decoded and processed (e.g., if the feedback includes an ACK indicating that all content of the HARQ transmission has been correctly decoded and processed), the transmitter 102 may responsively determine to omit a retransmission. In some embodiments, the receiver 104 sends current frame end (CF end) feedback, indicating that decoding and processing is complete, and responsive to receipt of the CF end feedback the transmitter 102 may determine to omit a retransmission. In some embodiments, the transmitter 102 may yield time of its allotted HARQ transmission opportunity (TxOP) that was reserved for retransmission, responsive to determining to omit the retransmission. In some embodiments, the transmitter 102 is configured to yield any remaining time of its allotted HARQ TxOP when the HARQ process is completed, and this completion may occur when the transmitter 102 determines to omit the retransmission, or following a retransmission, or when the transmitter 102 receives an ACK that indicates that all data or a sufficient amount or percent of data included in the initial transmission was correctly decoded by the receiver 104.

The receiver 104 may receive the retransmission, and may attempt to decode or process the data that was not initially correctly decoded or processed (e.g., that was not correctly decoded or processed on the basis of the initial transmission). In some embodiments, the receiver 104 may store data from the initial transmission that was not correctly decoded or processed, and may use that data in combination with the data included in the retransmission to correctly decode or process the relevant data. For example, the receiver 104 may implement a chase combining technique. For chase combining, a retransmission may include the same data and/or parity bits as included in the initial transmission. The receiver 104 can use, for example, maximum-ratio combining to combine the received bits with the corresponding bits from the initial transmission. As another example, the receiver 104 may implement an incremental redundancy technique. For incremental redundancy, the retransmission includes different information than the initial transmission. Multiple sets of parity bits may be generated, each based on the same set of information bits. The retransmission uses a different set of parity bits than the initial transmission, with a different redundancy version generated by the transmitter 102 by puncturing an encoder output. Thus, with the retransmission, the receiver gains extra information that can be used in conjunction with information received via the initial transmission.

Although a single retransmission is implemented in the embodiment shown in FIG. 1, multiple retransmissions may be implemented as part of the HARQ process. For example, the receiver 104 may transmit feedback to the transmitter 102 responsive to one or more retransmissions, and the transmitter 102 may perform a retransmission responsive to the feedback (e.g., responsive to a plurality of received NACKs). When the transmitter 102 receives, from the receiver 104, an ACK that indicates (possibly in combination with previously received feedback) that all data included in the initial transmission has been correctly decoded or processed by the receiver 104, the HARQ process may be concluded.

Certain comparative systems do not implement physical layer ACK/NACK. This may cause the comparative systems to attempt to process down to the MAC layer level (e.g., to decode the HARQ units to extract MPDUs, and to process the MPDUs) before determining feedback. This can be problematic when there are errors at the physical layer level. Certain systems and methods described herein implement physical layer ACK/NACK (and/or physical layer error code, as described in detail below), and determine feedback accordingly. Thus, the HARQ process may include physical layer level feedback and/or retransmission, and the HARQ process may accordingly be performed faster and/or more accurately.

Referring now to FIG. 2, FIG. 2 shows a diagram of a HARQ system 200 including the transmitter 102 and the receiver 104, according to some embodiments. The transmitter 102 and the receiver 104 may be communication devices (e.g., any of a network device (e.g., a Wi-Fi modem or other networking device), or a client device (such as a laptop, mobile device, tablet, Internet of things (IoT) connected device, or other device)). The transmitter 102 includes an MPDU buffer 204, a HARQ transmission generator 206, an interface (IF) 210, and a feedback manager 212. In some embodiments, the HARQ transmission generator 206 retrieves MPDUs stored in the MPDU buffer 204, encodes the MPDUs into one or more HARQ units, and generates a HARQ transmission (HARQ Tx) 208. The IF 210 sends the HARQ Tx 208 to the receiver 104, and the IF 210 receives feedback from the receiver 104 and sends that feedback to the feedback manager 212.

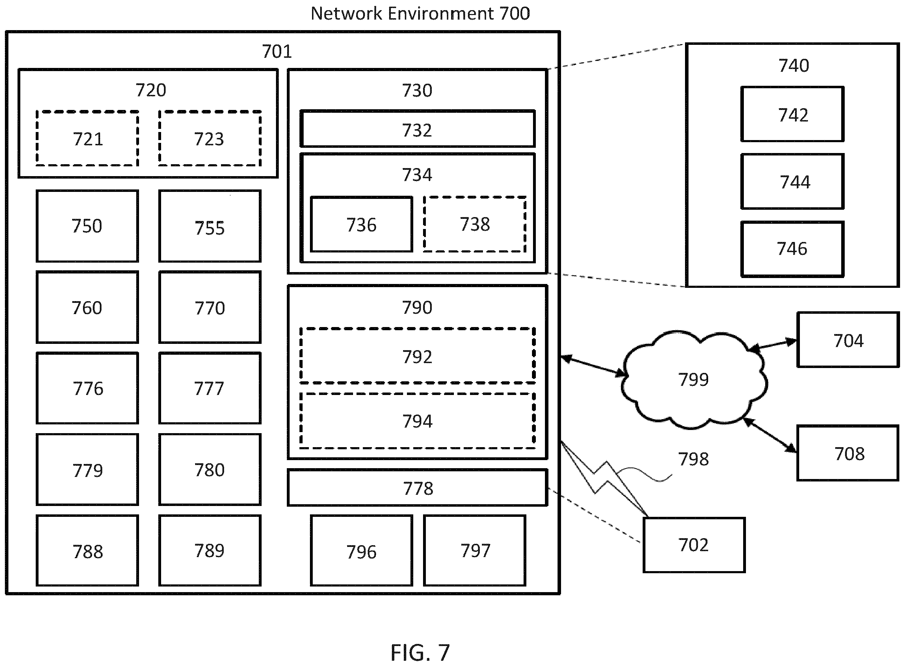

The components shown in FIG. 2 may be implemented as hardware, software, or a combination thereof. The components shown in FIG. 2 may be implemented using one or more of the components shown in FIG. 7.

The MPDU buffer 204 is configured to store MPDUs and/or MSDUs. The MPDUs may be MPDUs that are queued or temporarily stored by the transmitter 102 for transmission to the receiver 104. The MPDUs may include MSDUs received from a logical link control (LLC) sublayer, and may include MAC header information. The MPDUs may have been encoded by the transmitter 102, or may have been received by the transmitter 102 in encoded form from another device. In some embodiments, an MPDU or MSDU in the MPDU buffer 204 that is to be the next MAC layer data unit included in the HARQ transmission is referred to as a "next MAC layer data unit."

The HARQ transmission generator 206 is configured to generate the HARQ Tx 208 using the MPDUs stored in the MPDU buffer 204. The HARQ transmission generator 206 includes a HARQ unit manager 206a, a header generator 206b, and optionally a MAC control frame generator 206c. The HARQ transmission generator 206 may include an encoder configured to encode one or more portions of the HARQ Tx 208. One or more of the HARQ unit manager 206a or the header generator 206b may constitute at least a portion of such an encoder.

In some embodiments, the HARQ unit manager 206a is configured to determine a size of the HARQ units to be used in the HARQ Tx 208. The HARQ unit manager 206a may select a size for the HARQ units (a "HARQ unit size") from a set of permissible sizes (e.g., predetermined sizes permitted by a communication standard, such as a Wi-Fi standard). The HARQ unit size may be based on (e.g., may be equal to or substantially equal to) an integer number of symbols, an integer number of MPDUs, and/or an integer number of codewords. The HARQ unit size may be selected based on one or more of MSDU or MPDU size, control information exchanged between the transmitter 102 and the receiver 104, a channel condition for a channel over which information is exchanged between the transmitter 102 and the receiver 104, current transmitting parameters, or other factors.

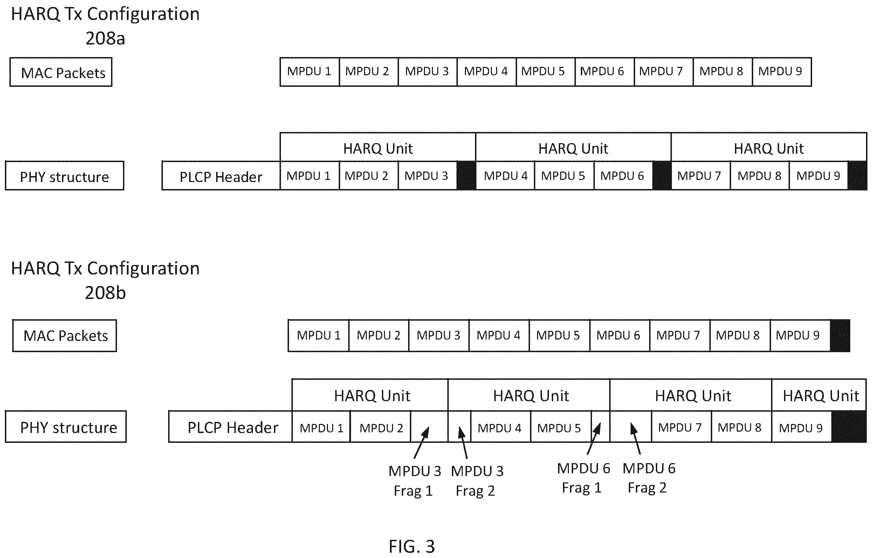

The HARQ unit manager 206a may generate one or more HARQ units for the HARQ Tx 208 by selecting MPDUs from the MPDU buffer 204 to include in the generated HARQ units. "Including" the MPDUs in the generated HARQ units may also be referred to as assigning, aggregating, or concatenating the MPDUs to the generated HARQ units. FIG. 3 shows two example HARQ Tx configurations that the HARQ unit manager 206a may implement to generate the HARQ units (the HARQ unit manager is not limited to implementing only these configurations). In some embodiments, the HARQ Tx 208 includes no more than one HARQ unit. In other embodiments, the HARQ Tx 208 includes a plurality of HARQ units.

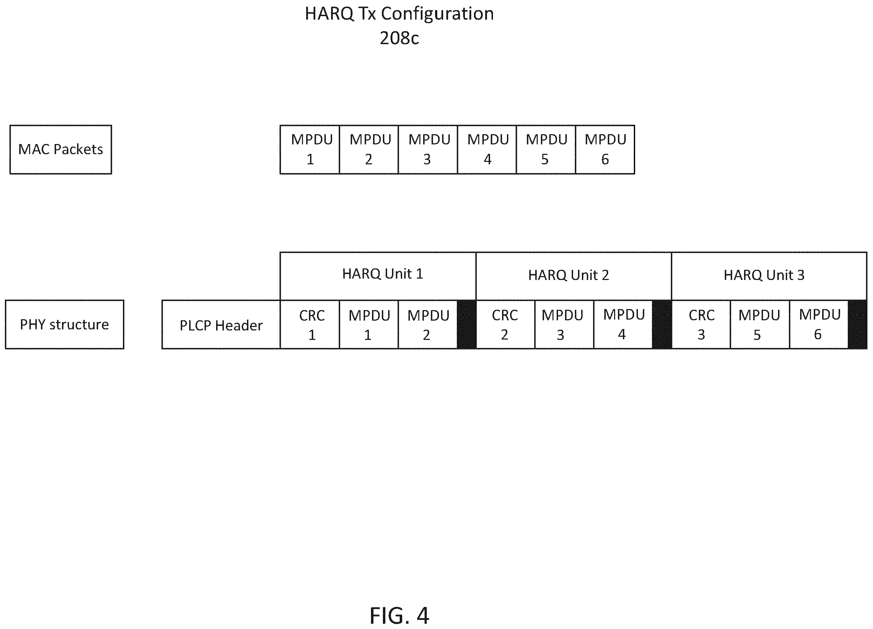

As shown in FIG. 3, the HARQ Tx configuration 208a involves an integer number of MPDUs, with (optionally) some padding (e.g., data or information that the receiver 104 is configured to disregard) to help the content of the HARQ unit match the selected HARQ unit size. In FIG. 3 (and in FIG. 4), the padding is illustrated as blacked-in rectangles. Similar padding may also be included in MPDUs, as shown for MPDU 9 of HARQ Tx configuration 208b.

The HARQ Tx configuration 208b involves optionally fragmenting MPDUs (e.g., assigning a first portion of an MPDU to one HARQ unit, and assigning a second portion of the MPDU to a second HARQ unit). Although the depicted HARQ Tx configuration 208b shows at least one full MPDU assigned to each HARQ unit, this need not be the case, and in some embodiments one or more HARQ units may each be assigned one or more respective fragments of one or more MPDUs, and the one or more HARQ units may have one or more fragments of MPDUs but not any complete MPDUs.

In some embodiments the fragmentation may be dynamically applied such that a first fragment of the MPDU is aligned with the end of a first HARQ unit, and a second fragment of the MPDU is located at the start of a second HARQ unit. Such a HARQ Tx configuration 208b may provide for increased efficiency (e.g., in that all, or more, available space of the HARQ units is used (e.g., relative to the HARQ Tx configuration 208a involving padding)).

The optional fragmenting may be used in place of, or in conjunction with, padding as described for the HARQ Tx configuration 208a. For example, in some embodiments, a last HARQ unit of a HARQ Tx 208b may not be completely full, and padding may be used to fill out the last HARQ unit, similarly to the manner shown in FIG. 3 with respect to the depicted HARQ Tx configuration 208a.

In some embodiments, dynamic fragmentation of an MSDU between two MPDUs may be implemented by the HARQ unit manager 206a. For example, the fragmentation may be dynamically applied such that a first fragment of the MSDU is aligned with the end of a first MPDU unit, and a second fragment is located at the start of a second MPDU. In some embodiments, a last MPDU may not be completely full, and padding may be used to fill out the last MPDU.

The dynamic fragmentation may provide for increased efficiency (e.g., in that all, or more, available space of the MPDUs is used (e.g., relative to the configurations involving padding)). In some embodiments, the HARQ Tx 208 comprises a first HARQ unit comprising a first portion of a MAC layer data unit, and a second HARQ unit comprising at least an encoded second portion of the MAC layer data unit. With this configuration, when an error occurs regarding the receiver 104's processing of the first HARQ unit, the transmitter need not retransmit (may omit retransmission of) the second HARQ unit in the HARQ process, and the receiver need not perform (may omit performing) a second processing of the encoded second portion of the MAC layer data unit in the HARQ process (a second processing subsequent to a first processing that corresponds to the initial transmission).

The HARQ unit manager 206a may include, in one or more or all of the HARQ units included in the HARQ Tx 208, error code. The error code may be physical layer error code pertaining to decoding of the HARQ units to extract the MPDUs included in the HARQ units. The error code may include, for example, error detecting code (such as a cyclic redundancy check code (CRC) or a parity check code). In some embodiments, the error code may be included in one or more of the HARQ units (e.g., in each of the HARQ units). An example of this is shown in FIG. 4, and is described in more detail below.

The header generator 206b may generate an appropriate header and/or preamble for the HARQ Tx 208. The preamble may be a physical layer preamble (e.g., a physical layer convergence procedure (PLCP) preamble). The header may be a physical layer header (e.g., a PLCP header) and may include, by way of example, any of a signal field, a service field, a length field, and a CRC (e.g., a CRC pertaining to other portions of the header). The preamble and/or header may include HARQ control information including, but not limited to, a HARQ unit size, transmitter and/or receiver identifiers (IDs), a new packet indicator, retransmission timing information, feedback-related information, a HARQ process ID (e.g., identifying the relevant HARQ process) and/or a HARQ unit ID (e.g., identifying one or more HARQ units included in the HARQ Tx 208).

The header generator 206b may generate an appropriate header and/or preamble for the HARQ Tx 208 that requests reserving a longer transmission time or longer TxOP than would be used for non-HARQ transmission. The longer transmission time or longer TxOP may provide sufficient time for receipt of feedback (for one or more cycles of feedback) and for one or more retransmissions. As noted above with respect to FIG. 1, the transmitter 102 may yield extra time of its allotted transmission time or TxOP responsive to determining to omit a retransmission (e.g., following receipt of a satisfactory ACK). In other embodiments, the transmitter 102 may use the extra time to transmit new data (e.g., data different from or additional to the data included in the initial transmission). In some embodiments, the transmitter 102 may determine an appropriate TxOP based on one or more of a total number of HARQ units, the selected HARQ unit size, a channel condition (which may be indicative of a retransmission possibility) or retransmission scheme (e.g., a chase combining scheme or an incremental redundancy scheme). The header generator 206b may generate an appropriate header and/or preamble for the HARQ Tx 208 that indicates which of these configurations is requested to be implemented.

In some embodiments, the transmitter 102 includes an optional MAC control frame generator 206c. The MAC control frame generator 206c may be configured to generate a MAC control frame that includes HARQ control information including, but not limited to, a HARQ unit size, transmitter and/or receiver IDs, a new packet indicator, retransmission timing information, feedback-related information, a HARQ process ID and/or a HARQ unit ID. The MAC control frame may be used in conjunction with, or as an alternative to, the HARQ control information included in the preamble or header. The MAC control frame may be transmitted to the receiver 104 out-of-band or independently from the HARQ transmission 208, and the receiver 104 may make use of such control information when decoding HARQ units or processing MPDUs included in the HARQ transmission.

In some embodiments, the IF 210 is a communication interface configured to transmit data from the transmitter 102 to another device (e.g., to the receiver 104), and to receive data from another device (e.g., from the receiver 104). The IF 210 may be configured for one or more communication protocols, such as (but not limited to) a Wi-Fi protocol or a local area network (LAN) protocol. The IF 210 may be configured to process and transmit data, such as the HARQ Tx 208, to the receiver 104. The IF 210 may be configured to receive data, such as feedback for the HARQ process, from the receiver 104. The IF 210 may forward the feedback to the feedback manager 212.

In some embodiments, the feedback manager 212 is configured to process feedback regarding the HARQ process. Such feedback may be feedback received from the receiver 104. The feedback manager 212 may, for example, determine whether to send or to omit a retransmission based on the feedback. For example, if the feedback manager 212 receives a NACK indicating that a particular HARQ unit was not correctly decoded, the feedback manager 212 may responsively determine to send a retransmission that includes the particular HARQ unit. If the feedback manager 212 receives a NACK indicating that an MPDU was not correctly processed, the feedback manager 212 may responsively determine to send a retransmission that includes the MPDU. In some embodiments, discussed in more detail below, the MPDU may have been fragmented between two HARQ units in the initial transmission, and the feedback manager 212 may determine to resend the same two HARQ units (e.g., with the same encoded MPDUs as were included in the initial transmission), or may determine to send, in the retransmission, the MAC layer data unit encoded in a single HARQ unit.

The feedback manager 212 may determine that the feedback indicates that all content of the HARQ transmission has been correctly decoded or processed (e.g., if the feedback includes an ACK indicating (either in and of itself, or in combination with other feedback) that all content of the HARQ transmission has been correctly decoded or processed), the feedback manager 212 may responsively determine to omit a retransmission. In some embodiments, the receiver 104 sends CF end feedback, indicating that decoding or processing is complete, and responsive to receipt of the CF end feedback the feedback manager 212 may determine to omit a retransmission.

The feedback manager may instruct the HARQ transmission generator 206 to prepare a retransmission, and may indicate to the HARQ transmission generator 206 content, configuration, or other parameters of the retransmission. Such instructions may be sent responsive to any of the feedback processing and analysis described above.

The receiver 104 includes an IF 214, a HARQ transmission manager 216, and a data storage 218. In some embodiments, the IF 214 receives the HARQ Tx 208 from the IF 210 and sends the HARQ Tx 208 to the HARQ transmission manager 216. The HARQ transmission manager 216 attempts to decode and process the HARQ Tx 208, and passes information about the decoding and processing attempt to the feedback manager 216c. The HARQ transmission manager 216 stores data that was not correctly decoded or processed in the data storage 218 (e.g., for use in future combining techniques). The feedback manager 216c uses the information about the decoding or processing attempt to determine feedback, and sends the determined feedback to the IF 214. The IF 214 sends the feedback to the IF 210, receives a retransmission from the IF 210, and passes the retransmission to the HARQ transmission manager 216 for further processing.

In some embodiments, the IF 214 is a communication interface configured to transmit data from the receiver 104 to another device (e.g., to the transmitter 102), and to receive data from another device (e.g., from the transmitter 102). The IF 214 may be configured for one or more communication protocols, such as (but not limited to) a Wi-Fi protocol or a local area network (LAN) protocol. The IF 214 may be configured to process and receive data, such as the HARQ Tx 208, from the transmitter 102. The IF 214 may be configured to transmit data, such as feedback for the HARQ process, to the transmitter 102. The IF 214 may receive such feedback from the feedback manager 216c. The IF 214 may forward a received HARQ transmission to the HARQ transmission manager 216.

In some embodiments, the HARQ transmission manager 216 is configured to decode and process the HARQ Tx 208. The HARQ transmission manager 216 may include a physical layer decoder 216a configured to decode HARQ units, a MAC layer manager 216b configured to process MPDUs, and a feedback manager 216c configured to generate feedback regarding decoding and processing of the HARQ Tx 208. The HARQ transmission manager 216 may be configured to manage one HARQ process at a time, or multiple HARQ processes in parallel. The HARQ transmission manager 216 may be configured to manage a HARQ process involving a single HARQ unit (e.g., in which the HARQ transmission includes only one HARQ unit), or a HARQ process involving multiple HARQ units (e.g., in which the HARQ transmission includes multiple HARQ units). In some embodiments, the HARQ transmission manager 216 may manage a HARQ process involving multiple HARQ units using, for example, parallel processing (e.g., parallel decoding of HARQ units) or appropriate feedback schemes (e.g., in which feedback for each HARQ unit is managed appropriately, such as by including in the feedback a HARQ unit ID, and by sending feedback as appropriate (e.g., by sending feedback whenever a HARQ unit has been processed, or by aggregating feedback for multiple HARQ units and sending the feedbacks together, as appropriate)).

The HARQ Tx 208 may include error detecting code (such as a cyclic redundancy check code (CRC) or a parity check code). The error code may be physical layer error code and/or MAC layer error code, allowing detection of errors at the HARQ level and at the MPDU level, respectively. The physical layer decoder 216a may make use of the physical layer error code to detect errors at the physical layer level, and the MAC layer manager 216b may make use of the MAC layer error code to detect errors at the MAC layer level.

In some embodiments, the physical layer decoder 216a may be configured to decode the HARQ units included in the HARQ Tx 208 to extract MPDUs. The physical layer decoder 216a may make use of control information, received from the transmitter 102 and included in a PLCP header or preamble, or included in a MAC control frame (e.g., as described above), to decode the HARQ units.

FIG. 4 shows an example HARQ Tx configuration 208c in which each HARQ unit of the HARQ Tx 208 includes a CRC code. In other embodiments, one or more (and not necessarily all) of the HARQ units may include the CRC code. In some embodiments, a parity check code is used alternatively to, or in addition to, the CRC code.

The CRC code can be used by the physical layer decoder 216a to detect physical layer errors in the HARQ units of the HARQ Tx 208. Using a physical layer error code may allow the HARQ transmission manager 216 to manage errors at the physical layer level, which can be important for speed and efficiency of the transmission process because, for example, an error at the physical layer level may make it difficult or impossible for the receiver 104 to extract and/or process MPDUs.

In some embodiments, one or more features of the HARQ Tx configuration 208c can be implemented with one or more features of the HARQ Tx configuration 208a and/or the HARQ Tx configuration 208b.

In some embodiments, the MAC layer manager 216b may process the decoded MPDUs to extract data (e.g., MSDU data or other data). The MAC layer manager 216b may make use of control information (e.g., included in a header of the MPDUs or received out-of-band) received from the transmitter 102 to process the MPDUs. The MAC layer manager 216b may make use of MAC layer error code (e.g., included in one or more of the MPDUs, or included in each of the MPDUs) to detect errors at the MAC layer level.

In some embodiments, the feedback manager 216c may generate feedback regarding the decoding and processing, and may send the feedback to the IF 214 for transmission to the transmitter 102. For example, the physical layer decoder 216a or the MAC layer manager 216b may indicate to the feedback manager that one or more data units (HARQ units or MPDUs) were correctly decoded or processed, and the feedback manager 216c may responsively generate an ACK indicating this (the ACK may be general, or may specifically indicate one or more HARQ units or MPDUs were correctly decoded, possibly using a HARQ unit ID or MPDU ID).

By way of further example, the physical layer decoder 216a or the MAC layer manager 216b may indicate to the feedback manager 216c that a data unit (e.g., a HARQ unit or an MPDU) includes a detected error. The physical layer decoder 216a or the MAC layer manager 216b may indicate which specific data unit has such an error (e.g., using a HARQ unit ID or an MPDU ID). The physical layer decoder 216a or the MAC layer manager 216b may indicate one or more such errors to the feedback manager 216c. The feedback manager 216c may responsively generate NACK feedback indicating this (the NACK may be general, or may specifically indicate one or more HARQ units or MPDUs were not correctly decoded or processed, possibly using a HARQ unit ID or MPDU ID).

In some embodiments, the feedback manager 216c may store any data unit that was not correctly decoded or processed in the data storage 218 and/or related data (e.g., error code corresponding to data that was not correctly decoded or processed, such as parity bits). The stored data unit may be used by the HARQ transmission manager 216 (e.g., by at least one of the physical layer decoder 216a or the MAC layer manager 216b) in conjunction with one or more data units received in a retransmission of the HARQ process to correctly decode or process a data unit of interest. For example, the HARQ transmission manager 216 may implement a chase combining technique or an incremental redundancy technique that makes use of the stored data unit and one or more data units received in the retransmission.

Thus configured, the HARQ system 200 may provide for a faster and/or more accurate implementation of a HARQ process.

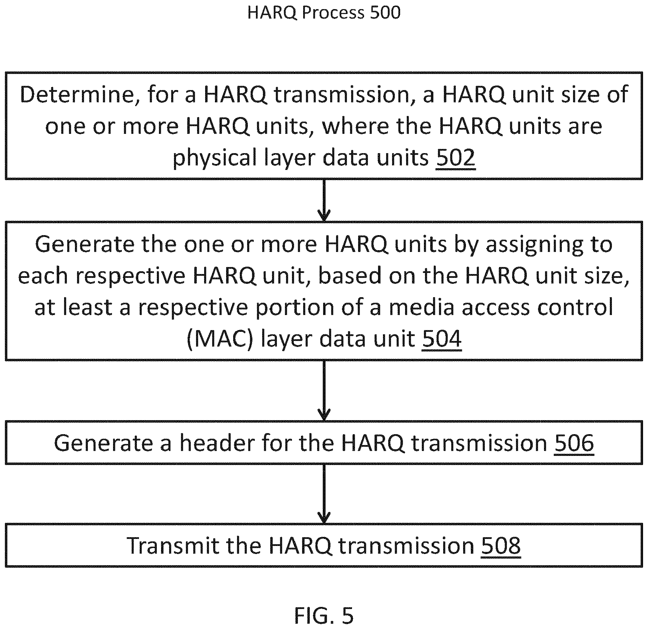

FIG. 5 shows a flowchart of a HARQ process 500, according to some embodiments. The HARQ process 500 includes determining, for a HARQ transmission, a HARQ unit size of one or more HARQ units, where the HARQ units are physical layer data units (block 502). The HARQ process 500 includes generating the one or more HARQ units by assigning to each respective HARQ unit, based on the HARQ unit size, at least a respective portion of a MAC layer data unit (block 504). The HARQ process 500 includes generating a header for the HARQ transmission (block 506). The HARQ process 500 includes transmitting the HARQ transmission (block 508).

In more detail, at block 502, the HARQ unit manager 206a determines a size of the HARQ units to be used in the HARQ Tx 208. The HARQ unit manager 206a may select a HARQ unit size from a set of permissible sizes (e.g., predetermined sizes permitted by a communication standard, such as a Wi-Fi standard). The HARQ unit size may be based on (e.g., may be equal to or substantially equal to) an integer number of symbols, an integer number of MPDUs, and/or an integer number of codewords.

At block 504, the HARQ unit manager 206a may generate one or more HARQ units for the HARQ Tx 208 by selecting MPDUs from the MPDU buffer 204 to include in the generated HARQ units. In some embodiments, the HARQ unit manager 206a may assign a first MPDU to a first HARQ unit, may determine a remaining amount of room for the first HARQ unit based on the determined size of the one or more HARQ units and a size of the first MAC layer data unit, and may determine, based on the remaining amount of room, that the second MAC layer data unit will not fit in the first HARQ unit without fragmentation. The HARQ unit manager 206a may responsively fragment the second MAC layer data unit into at least the first portion of the second MAC layer data unit and the second portion of the second MAC layer data unit, wherein the first portion of the second MAC layer data unit is sized based on the remaining amount of room for the first HARQ unit.

In some embodiments, the HARQ unit manager 206a may determine, based on the HARQ unit size, a highest integer number of MAC layer data units that will fit in the HARQ unit, and assign the highest integer number of MAC layer data units to each respective HARQ unit such that a remainder portion of the HARQ unit is not filled by the determined highest integer number of MAC layer data units. The HARQ unit manager 206a may assign padding to each respective HARQ unit to fill the remainder portion of the HARQ unit.

At block 506, the header generator 206b may generate an appropriate header and/or preamble for the HARQ Tx 208. The preamble may be a physical layer preamble (e.g., a physical layer convergence procedure (PLCP) preamble). The header may be a physical layer header (e.g., a PLCP header) and may include, by way of example, any of a signal field, a service field, a length field, or a CRC (e.g., a CRC pertaining to other portions of the header). The preamble and/or header may include HARQ control information including, but not limited to, a HARQ unit size, transmitter and/or receiver IDs, a new packet indicator, retransmission timing information, feedback-related information, a HARQ process ID (e.g., identifying the relevant HARQ process) and/or a HARQ unit ID (e.g., identifying one or more HARQ units included in the HARQ Tx 208).

The header generator 206b may generate an appropriate header and/or preamble for the HARQ Tx 208 that requests reserving a longer transmission time or longer TxOP than would be used for non-HARQ transmission. The longer transmission time or longer TxOP may provide sufficient time for receipt of feedback (for one or more feedback cycles) and for one or more retransmissions. As noted above with respect to FIG. 1, the transmitter 102 may yield extra time of its allotted transmission time or TxOP responsive to determining to omit a retransmission (e.g., following receipt of a satisfactory ACK). In other embodiments, the transmitter 102 may use the extra time to transmit new data (e.g., data different from or additional to the data included in the initial transmission). The header generator 206b may generate an appropriate header and/or preamble for the HARQ Tx 208 that indicates which of these configurations is requested to be implemented.

At block 508, the IF 210 may transmit the HARQ Tx 208 to the receiver 104. The IF may use one or more communication protocols, such as (but not limited to) a Wi-Fi protocol or a local area network (LAN) protocol. Thus, the initial transmission of the HARQ process may be implemented. One or more feedback processes and one or more retransmission processes as described herein may additionally be implemented.

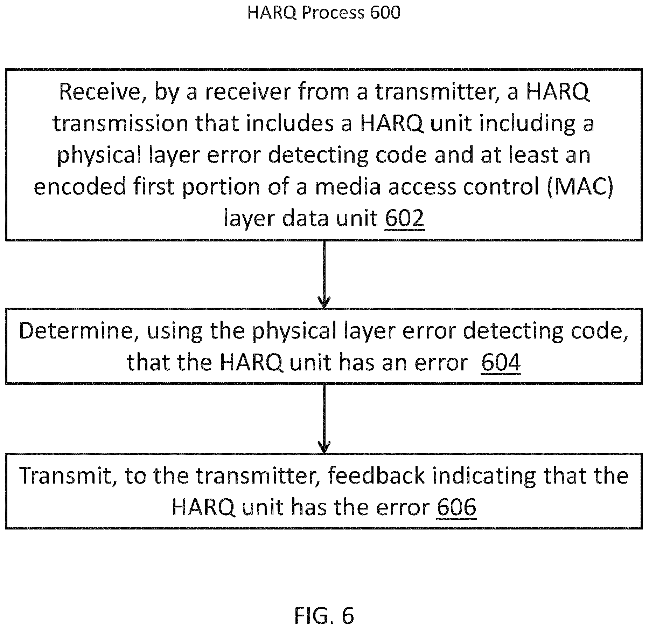

FIG. 6 shows a flowchart of a HARQ process 600, according to some embodiments. The HARQ process 600 includes receiving, by a receiver from a transmitter, a HARQ transmission that includes a HARQ unit including a physical layer error detecting code (and possibly a MAC layer error detecting code) and at least an encoded first portion of a MAC layer data unit (block 602). The HARQ process 600 includes determining, using the physical layer error detecting code (and possibly a MAC layer error detecting code), that the HARQ unit has an error (block 604). The HARQ process 600 includes transmitting, to the transmitter, feedback indicating that the HARQ unit has the error (block 606).

In more detail, at block 602, the IF 214 of the receiver 104 may receive, from the transmitter 102, the HARQ Tx 208 that includes a HARQ unit. The HARQ unit may include a physical layer error detecting code and at least an encoded first portion of a MAC layer data unit (e.g., as shown in FIG. 4).

At block 604, the physical layer decoder 216a may determine, using the physical layer error detecting code included in the HARQ unit, that the HARQ unit has an error. As used herein, reference to a data unit (such as the HARQ unit discussed above) having an "error" may mean that the data unit cannot or has not been correctly decoded by a decoder (e.g., a specified or specific decoder). Using the physical layer error code may allow the HARQ transmission manager 216 to manage errors at the physical layer level, which can improve the speed of the HARQ process.

At block 606, the feedback manager transmits, to the transmitter 102, using the IF 214, feedback indicating that the HARQ unit has an error. The feedback may include a physical layer level NACK indicating that one or more HARQ units was not correctly decoded by the receiver 104. Thus, a feedback process of the HARQ process may be implemented. One or more feedback processes and one or more retransmission processes as described herein may additionally be implemented.

FIG. 7 shows a diagram of an electronic device 701 in a network environment 700, according to some embodiments. Referring to FIG. 7, the electronic device 701 in the network environment 700 may communicate with an electronic device 702 via a first network 798 (e.g., a short-range wireless communication network, such as a Wi-Fi network), or an electronic device 704 or a server 708 via a second network 799 (e.g., a long-range wireless communication network). The electronic device 701 may communicate with the electronic device 704 via the server 708. The electronic device 701 may include a processor 720, a memory 730, an input device 750, a sound output device 755, a display device 760, an audio module 770, a sensor module 776, an interface 777, a haptic module 779, a camera module 780, a power management module 788, a battery 789, a communication module 790, a subscriber identification module (SIM) 796, and/or an antenna module 797. In one embodiment, at least one of the components (e.g., the display device 760 or the camera module 780) may be omitted from the electronic device 701, or one or more other components may be added to the electronic device 701. In one embodiment, some of the components may be implemented as a single integrated circuit (IC). For example, the sensor module 776 (e.g., a fingerprint sensor, an iris sensor, or an illuminance sensor) may be embedded in the display device 760 (e.g., a display), or the display device 760 may include one or more sensors in addition to the sensor module 776.

In some embodiments, the device 701 may include the transmitter 102, and one of the devices 702, 704, or 708 may be, or a device managing the network 798 or the network 799 may include, the receiver 104. In some embodiments, the device 701 may include the receiver 104, and one of the devices 702, 704, or 708 may be, or a device managing the network 798 or the network 799 may include, the transmitter 102. In some embodiments, the HARQ system 100 includes a first device 701 and a second device 701, the transmitter 102 is included in the first device 701, and the receiver 104 is included in the second device 701.

The processor 720 may execute, for example, software (e.g., a program 740) to control at least one other component (e.g., a hardware or a software component) of the electronic device 701 coupled with the processor 720, and may perform various data processing and/or computations. As at least a part of the data processing and/or computations, the processor 720 may load a command or data received from another component (e.g., the sensor module 776 or the communication module 790) in volatile memory 732, process the command or the data stored in the volatile memory 732, and store resulting data in non-volatile memory 734. The processor 720 may include a main processor 721 (e.g., a central processing unit (CPU) or an application processor (AP)), and an auxiliary processor 723 (e.g., a graphics processing unit (GPU), an image signal processor (ISP), a sensor hub processor, or a communication processor (CP)) that is operable independently from, or in conjunction with, the main processor 721. Additionally or alternatively, the auxiliary processor 723 may be adapted to consume less power than the main processor 721, and/or execute a particular function. The auxiliary processor 723 may be implemented as being separate from, or as a part of, the main processor 721.

The auxiliary processor 723 may control at least some of the functions or states related to at least one component (e.g., the display device 760, the sensor module 776, or the communication module 790) from among the components of the electronic device 701, instead of the main processor 721 while the main processor 721 is in an inactive (e.g., sleep) state, or together with the main processor 721 while the main processor 721 is in an active state (e.g., executing an application). According to one embodiment, the auxiliary processor 723 (e.g., an image signal processor or a communication processor) may be implemented as a part of another component (e.g., the camera module 780 or the communication module 790) functionally related to the auxiliary processor 723.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 and/or the non-volatile memory 734.

The program 740 may be stored in the memory 730 as software, and may include, for example, an operating system (OS) 742, middleware 744, or an application 746.

The input device 750 may receive a command or data to be used by another component (e.g., the processor 720) of the electronic device 701, from the outside (e.g., a user) of the electronic device 701. The input device 750 may include, for example, a microphone, a mouse, and/or a keyboard.

The sound output device 755 may output sound signals to the outside of the electronic device 701. The sound output device 755 may include, for example, a speaker or a receiver. The speaker may be used for general purposes, such as playing multimedia or recording, and the receiver may be used for receiving an incoming call. According to one embodiment, the receiver may be implemented as being separate from, or as a part of, the speaker.

The display device 760 may visually provide information to the outside (e.g., a user) of the electronic device 701. The display device 760 may include, for example, a display, a hologram device, and/or a projector and control circuitry to control a corresponding one of the display, the hologram device, and the projector. According to one embodiment, the display device 760 may include touch circuitry adapted to detect a touch, or sensor circuitry (e.g., a pressure sensor) adapted to measure the intensity of force incurred by the touch.

The audio module 770 may convert a sound into an electrical signal and vice versa. According to one embodiment, the audio module 770 may obtain the sound via the input device 750, and/or output the sound via the sound output device 755 or a headphone of an external electronic device 702 directly (e.g., wired) or wirelessly coupled with the electronic device 701.

The sensor module 776 may detect an operational state (e.g., power or temperature) of the electronic device 701 and/or an environmental state (e.g., a state of a user) external to the electronic device 701, and then generate an electrical signal or data value corresponding to the detected state. The sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 777 may support one or more specified protocols to be used for the electronic device 701 to be coupled with the external electronic device 702 directly (e.g., wired) or wirelessly. According to one embodiment, the interface 777 may include, for example, a high definition multimedia interface (HDMI), a universal serial bus (USB) interface, a secure digital (SD) card interface, and/or an audio interface.

A connecting terminal 778 may include a connector via which the electronic device 701 may be physically connected with the external electronic device 702. According to one embodiment, the connecting terminal 778 may include, for example, an HDMI connector, a USB connector, an SD card connector, and/or an audio connector (e.g., a headphone connector).

The haptic module 779 may convert an electrical signal into a mechanical stimulus (e.g., a vibration or a movement) and/or an electrical stimulus which may be recognized by a user via tactile sensation or kinesthetic sensation. According to one embodiment, the haptic module 779 may include, for example, a motor, a piezoelectric element, and/or an electrical stimulator.

The camera module 780 may capture a still image or moving images. According to one embodiment, the camera module 780 may include one or more lenses, image sensors, image signal processors, and/or flashes.

The power management module 788 may manage power supplied to the electronic device 701. The power management module 788 may be implemented as at least a part of, for example, a power management integrated circuit (PMIC).

The battery 789 may supply power to at least one component of the electronic device 701. According to one embodiment, the battery 789 may include, for example, a primary cell which is not rechargeable, a secondary cell which is rechargeable, and/or a fuel cell.

The communication module 790 may support establishing a direct (e.g., wired) communication channel or a wireless communication channel between the electronic device 701 and the external electronic device (e.g., the electronic device 702, the electronic device 704, and/or the server 708) and performing communication via the established communication channel. The communication module 790 may include one or more communication processors that are operable independently from the processor 720 (e.g., the AP) and may support a direct (e.g., wired) communication and/or a wireless communication. According to one embodiment, the communication module 790 may include a wireless communication module 792 (e.g., a cellular communication module, a short-range wireless communication module, and/or a global navigation satellite system (GNSS) communication module) or a wired communication module 794 (e.g., a local area network (LAN) communication module or a power line communication (PLC) module). A corresponding one of these communication modules may communicate with the external electronic device via the first network 798 (e.g., a short-range communication network, such as Bluetooth®, wireless-fidelity (Wi-Fi) direct, and/or a standard of the Infrared Data Association (IrDA)) or the second network 799 (e.g., a long-range communication network, such as a cellular network, the Internet, and/or a computer network (e.g., LAN or wide area network (WAN)). Bluetooth® is a registered trademark of Bluetooth SIG, Inc., Kirkland, WA. These various types of communication modules may be implemented as a single component (e.g., a single IC), or may be implemented as multiple components (e.g., multiple ICs) that are separate from each other. The wireless communication module 792 may identify and authenticate the electronic device 701 in a communication network, such as the first network 798 or the second network 799, using subscriber information (e.g., international mobile subscriber identity (IMSI)) stored in the subscriber identification module 796.

The antenna module 797 may transmit and/or receive a signal and/or power to and/or from the outside (e.g., the external electronic device) of the electronic device 701. According to one embodiment, the antenna module 797 may include one or more antennas, and, therefrom, at least one antenna appropriate for a communication scheme used in the communication network, such as the first network 798 and/or the second network 799, may be selected, for example, by the communication module 790 (e.g., the wireless communication module 792). The signal and/or the power may then be transmitted and/or received between the communication module 790 and the external electronic device via the selected at least one antenna.

At least some of the above-described components may be mutually coupled and communicate signals (e.g., commands and/or data) therebetween via an inter-peripheral communication scheme (e.g., a bus, a general purpose input and output (GPIO), a serial peripheral interface (SPI), and/or a mobile industry processor interface (MIPI)).

According to one embodiment, commands and/or data may be transmitted and/or received between the electronic device 701 and the external electronic device 704 via the server 708 coupled with the second network 799. Each of the electronic devices 702 and 704 may be a device of a same type as, or a different type from, the electronic device 701. All or some of operations to be executed at or by the electronic device 701 may be executed at one or more of the external electronic devices 702, 704, or 708. For example, if the electronic device 701 should perform a function and/or a service automatically, or in response to a request from a user or another device, the electronic device 701, instead of, or in addition to, executing the function and/or the service, may request the one or more external electronic devices to perform at least a part of the function and/or the service. The one or more external electronic devices receiving the request may perform the at least a part of the function and/or the service requested, and/or an additional function and/or an additional service related to the request, and transfer an outcome of the performing to the electronic device 701. The electronic device 701 may provide the outcome, with or without further processing of the outcome, as at least a part of a reply to the request. To that end, a cloud computing, distributed computing, and/or client-server computing technology may be used, for example.

One embodiment may be implemented as software (e.g., the program 740) including one or more instructions that are stored in a storage medium (e.g., internal memory 736 or external memory 738) that is readable by a machine (e.g., the electronic device 701). For example, a processor of the electronic device 701 may invoke at least one of the one or more instructions stored in the storage medium, and execute it, with or without using one or more other components under the control of the processor. Thus, a machine may be operated to perform at least one function according to the at least one instruction invoked. The one or more instructions may include code generated by a compiler or code executable by an interpreter. A machine-readable storage medium may be provided in the form of a non-transitory storage medium. The term "non-transitory" indicates that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Herein, embodiments of the present disclosure are described in detail with reference to the accompanying drawings. It should be noted that same or similar elements may be designated by the same reference numerals/letters even though they are shown in different drawings. In the description herein, specific details such as detailed configurations and components are provided to assist with the overall understanding of the embodiments of the present disclosure. Various changes and modifications of the embodiments described herein may be made without departing from the scope of the present disclosure. Certain detailed descriptions may be omitted for clarity and conciseness.

The present disclosure provides for various modifications and various embodiments. It should be understood that the present disclosure is not limited to the various embodiments explicitly described or detailed herein, and that the present disclosure includes modifications, equivalents, and alternatives within the scope of the present disclosure.

Although terms including an ordinal number such as first, second, etc., may be used for describing various elements, the elements are not restricted by such terms. Such terms are used to distinguish one element from another element, and do not imply any specific ordering. As used herein, the term "and/or" includes any and all combinations of one or more associated items. Singular forms are intended to include plural forms unless the context clearly indicates otherwise. In the present disclosure, it should be understood that the terms "include" or "have" indicate the existence of a feature, a number, a step, an operation, a structural element, a part, or a combination thereof, and do not exclude the existence or probability of the addition of one or more other features, numbers, steps, operations, structural elements, parts, or combinations thereof.

According to one embodiment, at least one component (e.g., a manager, a set of processor-executable instructions, a program, or a module) of the above-described components may include a single entity or multiple entities. One or more of the above-described components may be omitted, or one or more other components may be added. Alternatively or additionally, a plurality of components (e.g., a manager, a set of processor-executable instructions, a program, or a module) may be integrated into a single component. In this case, the integrated component may still perform one or more functions of each of the plurality of components in the same or similar manner as they are performed by a corresponding one of the plurality of components before the integration. Operations performed by the manager, the set of processor-executable instructions, the program, the module, or another component may be carried out sequentially, in parallel, repeatedly, or heuristically, or one or more of the operations may be executed in a different order or omitted, or one or more other operations may be added.

## Claims

1. A method of implementing a hybrid automatic repeat request (HARQ) process, comprising:
generating a HARQ transmission that comprises one or more HARQ units by:
determining a HARQ unit size of the one or more HARQ units;
generating the one or more HARQ units by assigning to each respective HARQ unit, based on the HARQ unit size, at least a respective portion of a media access control (MAC) layer data unit; and
generating a header for the HARQ transmission; and
transmitting the HARQ transmission to a receiver,
wherein the one or more HARQ units are physical layer data units.

2. The method of claim 1, wherein the HARQ transmission comprises no more than one HARQ unit.

3. The method of claim 1, wherein the HARQ transmission comprises a plurality of HARQ units,
wherein assigning to each respective HARQ unit at least a respective portion of a MAC layer data unit comprises:
determining a remaining amount of room for a first HARQ unit of the plurality of HARQ units based on the HARQ unit size and based on any MAC layer data units already assigned to the first HARQ unit;
determining, based on the remaining amount of room, that a complete next MAC layer data unit will not fit in the first HARQ unit;
fragmenting, responsive to the determining that the complete next MAC layer data unit will not fit in the first HARQ unit, the next MAC layer data unit into at least a first portion of the next MAC layer data unit and a second portion of the next MAC layer data unit, wherein the first portion of the next MAC layer data unit is sized based on the remaining amount of room for the first HARQ unit;
assigning, to the first HARQ unit, the first portion of the next MAC layer data unit; and
assigning, to a second HARQ unit, the second portion of the next MAC layer data unit.

4. The method of claim 3, further comprising assigning, to the first HARQ unit, an unfragmented MAC data unit prior to determining the remaining amount of room for the first HARQ unit.

5. The method of claim 1, wherein assigning to each respective HARQ unit at least a respective portion of a MAC layer data unit comprises:
determining, based on the HARQ unit size, a highest integer number of MAC layer data units that will fit in the HARQ unit;
assigning the highest integer number of MAC layer data units to each respective HARQ unit such that a remainder portion of the HARQ unit is not filled by the determined highest integer number of MAC layer data units; and
assigning padding to each respective HARQ unit to fill the remainder portion of the HARQ unit.

6. The method of claim 1, wherein determining the HARQ unit size comprises selecting the HARQ unit size from a set of pre-determined HARQ unit sizes,
wherein the header for the HARQ transmission includes an indication of the selected HARQ unit size.

7. A system for implementing a hybrid automatic repeat request (HARQ) process, comprising:
a processor; and
a memory storing non-transitory processor-executable instructions that, when executed by the processor, cause the processor to:
generate a HARQ transmission that comprises one or more HARQ units by:
determining a HARQ unit size of the one or more HARQ units;
generating the one or more HARQ units by assigning to each respective HARQ unit, based on the HARQ unit size, at least a respective portion of a media access control (MAC) layer data unit; and
generating a header for the HARQ transmission; and
transmit the HARQ transmission to a receiver,
wherein the one or more HARQ units are physical layer data units.

8. The system of claim 7, wherein the header includes a preamble signal that indicates HARQ control information comprising: a transmitter identifier, a receiver identifier, a new packet indicator, retransmission timing information, feedback information, a HARQ process identifier, or a HARQ unit identifier.

9. The system of claim 7, wherein the instructions, when executed by the processor, further cause the processor to transmit a MAC layer control frame that indicates HARQ control information, the MAC layer control frame comprising: a transmitter identifier, a receiver identifier, a new packet indicator, retransmission timing information, feedback information, a HARQ process identifier, or a HARQ unit identifier.

10. The system of claim 7, wherein the instructions, when executed by the processor, further cause the processor to process received physical layer feedback frames,
wherein the physical layer feedback frames include physical layer ACK or NACK frames.

11. The system of claim 7, wherein the instructions, when executed by the processor, further cause the processor to:
schedule a HARQ transmission opportunity long enough to accommodate a HARQ retransmission;
process received feedback regarding the HARQ transmission; and
retransmit at least a portion of the HARQ transmission,
wherein the instructions, when executed by the processor, further cause the processor to transmit one or more packets different from the packets included in the HARQ transmission along with the retransmitted at least a portion of the HARQ transmission.

12. The system of claim 7, wherein the instructions, when executed by the processor, further cause the processor to:
schedule a HARQ transmission opportunity long enough to accommodate a HARQ retransmission;
process received ACK feedback regarding the HARQ transmission; and
transmit one or more packets different from the packets included in the HARQ transmission during the scheduled HARQ transmission opportunity, where the packets different from the packets included in the HARQ transmission do not include error code corresponding to the packets included in the HARQ transmission.

13. A method of implementing, by a receiver, a hybrid automatic repeat request (HARQ) process, comprising:
receiving, from a transmitter, a HARQ transmission that comprises a first HARQ unit comprising a first physical layer error detecting code and at least an encoded first portion of a media access control (MAC) layer data unit;
determining, using the first physical layer error detecting code, that the first HARQ unit has an error; and
transmitting, to the transmitter, feedback indicating that the first HARQ unit has the error.

14. The method of claim 13, wherein determining that the first HARQ unit has an error is performed without processing any MAC layer data units included in the first HARQ unit.

15. The method of claim 13, wherein:
the HARQ transmission comprises a second HARQ unit comprising at least an encoded second portion of the MAC layer data unit,
the receiver correctly decodes the encoded second portion of the MAC layer data unit, and
the receiver transmits, to the transmitter, ACK feedback regarding the second portion of the MAC layer data unit.
